Europäisches Patentamt

European Patent Office

Office européen des brevets

(11) Veröffentlichungsnummer : **0 199 008**
**B1**

(12)

# EUROPÄISCHE PATENTSCHRIFT

(45) Veröffentlichungstag der Patentschrift :
27.07.88

(51) Int. Cl.⁴ : **B 65 G 69/28**

(21) Anmeldenummer : **86102056.8**

(22) Anmeldetag : **18.02.86**

---

(54) Schrägrampe.

---

(30) Priorität : **23.02.85 DE 3506425**

(43) Veröffentlichungstag der Anmeldung :
**29.10.86 Patentblatt 86/44**

(45) Bekanntmachung des Hinweises auf die Patenterteilung : **27.07.88 Patentblatt 88/30**

(84) Benannte Vertragsstaaten :
**AT BE CH DE FR GB IT LI LU NL SE**

(56) Entgegenhaltungen :
**DE-A- 2 231 694**
**DE-A- 3 108 293**
**GB-A- 1 345 865**

(73) Patentinhaber : **Alten, Kurt**
**Ringstrasse 14**
**D-3015 Wennigsen (DE)**

(72) Erfinder : **Alten, Kurt**
**Ringstrasse 14**
**D-3015 Wennigsen (DE)**

(74) Vertreter : **Depmeyer, Lothar**
**Auf der Höchte 30**
**D-3008 Garbsen 1 (DE)**

## Beschreibung

Die Erfindung betrifft eine ortsveränderbare, insb. verfahrbare Schrägrampe nach dem Gattungsbegriff des ersten Patentanspruchs.

Bei bekannten Schrägrampen sind die beiden zu beiden Seiten der Rampe befindlichen Längsträger durch biegesteife Profile verbunden, die zur Auflage eines Rostes dienen, welches die Verkehrsfläche der Rampe bildet. Die die Verkehrsfläche bildenden Elemente der Rampe werden somit durch besondere Träger unterfangen. Diese Vorschläge sind in den Patentschriften GB-A-1 345 865 und DE-A-2 231 865 beschrieben.

Weiterhin sind Rampen der eingangs erwähnten Art bekannt (DE-A1-3 108 293), bei denen die Querträger einen u-förmigen Querschnitt haben und die Verkehrsfläche von den freien Enden der nach oben gerichteten Schenkel der Querträger gebildet sind. Abgesehen davon, dass somit eine geschlossene Verkehrsfläche nicht entstehen kann, sind auch die nach oben gerichteten Schenkel benachbarter Querträger im Abstand voneinander angeordnet. Zwar wird hierdurch das Rampengewicht verringert, der Anwendungsbereich einer solchen Rampe ist jedoch sehr eingeschränkt.

Der Erfindung liegt die Aufgabe zugrunde, die eingangs erwähnten Rampen so zu verbessern, dass unter Verwendung einfacher Konstruktionsmittel eine Rampe hoher Tragfähigkeit entsteht und eine weitgehend geschlossene Verkehrsfläche in der Weise möglich ist, dass sie ohne weiteres von Personen begangen und von beliebigen Transportfahrzeugen benutzt werden kann.

Zur Lösung dieser Aufgabe bildet erfindungsgemäss der Steg die Verkehrsfläche und die nach unten gerichteten Schenkel benachbarter Querträger liegen aneinander und sind durch Schrauben od. dgl. verbunden.

Somit ergibt sich eine grosse Verkehrsfläche, die ohne weiteres noch mit Durchbrechungen versehen sein kann, deren Ränder zur Erhöhung der Griffigkeit nach oben gewölbt sind. Da benachbarte Schenkel durch Schrauben verbunden sind, ergibt sich eine äusserst stabile Rampe, die auch gegen in der Rampenebene wirkende Schrägkräfte sehr widerstandsfähig ist.

Versuche haben gezeigt, dass die erfindungsgemässen Rampen nicht nur zu einer Verringerung der Abmessungen, sondern auch zu einer erheblichen Gewichtsreduzierung führen und bei Stahlelementen Gewichte erzielbar sind, die gut mit sog. Aluminiumkonstruktionen vergleichbar sind.

Vorteilhafte Weiterbildungen der erfindungsgemässen Rampe sind in den Unteransprüchen beschrieben.

Weitere Einzelheiten der Erfindung werden anhand der Zeichnung erläutert, in der ein Ausführungsbeispiel der Erfindung dargestellt ist.

Es zeigen :

Fig. 1 eine Schrägrampe in der Seitenansicht, und zwar in schematischer Darstellung,

Fig. 2 eine Teilseitenansicht der Rampe nach Fig. 1, und zwar den unteren Endbereich,

Fig. 3 eine Draufsicht auf den Rampenabschnitt nach Fig. 2,

Fig. 4 einen Schnitt nach der Linie IV-IV von Fig. 3 und

Fig. 5 einen Schnitt nach der Linie V-V von Fig. 3.

Die Rampe weist an beiden seitlichen Rändern einen Längsträger 1 auf, der kastenförmig ausgebildet ist mit hochkant stehendem Rechteckhohlraum. Die innere Seitenwand ist mit 2 bezeichnet ; der Boden 3 ist nach innen hin verbreitert. Diese Verbreiterung 4 hat etwa die Länge des eigentlichen Bodens 3.

An beiden Enden der Rampe befinden sich dreieckförmige, meist hohle Endstücke 5. Etwa mittig auf halber Länge der Rampe befindet sich ein beliebiges Fahrgestell 6, mit dem die Rampe verfahren werden kann. Dieses Fahrgestell 6 kann in üblicher Weise in eine Wirkstellung gebracht werden bzw. zum Verfahren der Rampe ggfs. ausgefahren werden.

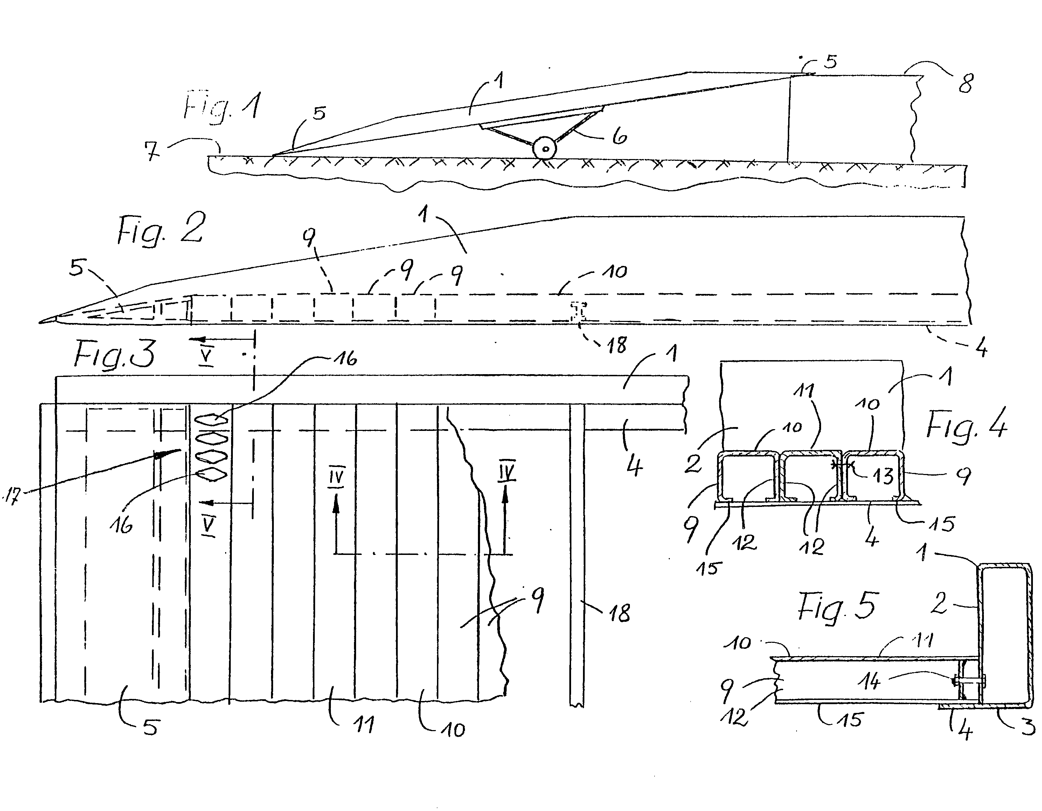

Wie Fig. 1 erkennen lässt, hat die Schrägrampe die Aufgabe, für Flurfördergeräte od. dgl. eine Fahrbahn zwischen einer normalen Fahrbahn bzw. einer Strassenoberfläche 7 einerseits und einer höher gelegenen Plattform 8 zu schaffen, an deren Rand die Rampe mit einer geeigneten Endgestaltung des Endstückes 5 angreift.

Die beiden Längsträger 1 stehen zwischen den beiden Endstücken 5 durch Querträger 9 in Verbindung, die aus Stahlblech gebogen oder in ähnlicher Weise ausgeführt sind und einen etwa u-förmigen Querschnitt haben. Der oben gelegene Steg 10 bildet dabei die Verkehrsfläche 11 der Rampe, während die senkrecht zur Verkehrsfläche 11 verlaufenden Schenkel 12 nach unten gerichtet sind. Dabei sind die Schenkel 12 benachbarter Querträger 9 fest z. B. durch Schrauben bei 13 miteinander verbunden.

Die Enden der Querträger 9 liegen auf der Verbreiterung 4 auf und stossen stumpf an die Seitenwand 2 an. Dort sind vorzugsweise ebenfalls Schraubverbindungen z. B. bei 14 vorgesehen, um so die Querträger 9 fest mit den Längsträgern 1 verbinden zu können. Um die Auflage der Querträger 9 zu verbessern und auch die Festigkeit zu erhöhen, können die Schenkelenden noch mit kleinen Abwinkelungen oder Abbiegungen 15 versehen sein, die nach innen gerichtet sind.

Die Stege 10 sind noch mit Durchbrechungen 16 versehen, dicht bei dicht liegend über die Länge der Querträger 9 verteilt angeordnet sind und langgestreckt sich etwa über die Steglänge erstrecken. Diese Durchbrechungen 16 sind aus Gründen der einfacheren Darstellung nur bei 17 wiedergegeben.

Es können z. T. innerhalb der Querträger 9 noch in grossem Abstand schwache Querverbindungen 18 vorgesehen sein. Diese Profile sind jedoch nur aus Montagegründen angebracht und haben festigkeitsmässig keine Bedeutung. Sie bilden auch nicht die Verkehrsfläche 11.

## Patentansprüche

1. Ortsveränderbare, insb. verfahrbare Schrägrampe zum Be- und Entladen von gegenüber der Fahrbahn (7) gelegenen Plattformen (8) od. dgl. mit zwei zu beiden Seiten der Rampe befindlichen Längsträgern (1), die durch über die Rampenlänge verteilt angeordnete, im Querschnitt im wesentlichen u-förmige Querträger (9) verbunden sind, die zumindest den grössten Teil der Verkehrsfläche (11) der Rampe bilden, wobei die beiden durch den Steg (10) verbunden Schenkel (12) der Querträger senkrecht zur Verkehrsfläche (11)angeordnet sind, dadurch gekennzeichnet, dass der Steg (10) die Verkehrsfläche (11) bildet und die nach unten gerichteten Schenkel (12) benachbarter Querträger (9) aneinander liegen und durch Schrauben (13) od. dgl. verbunden sind.

2. Rampe nach Anspruch 1, dadurch gekennzeichnet, dass die Schenkelenden kleine Abwinkelungen oder Abbiegungen (15) haben, die nach innen gerichtet sind.

3. Rampe nach Anspruch 1, dadurch gekennzeichnet, dass die Längsträger (1) ein hochkant stehendes Hohlprofil sind, dessen Boden (3) eine nach innen gerichtete Verbreiterung (4) zur Auflage der Querträger (9) hat.

4. Rampe nach Anspruch 3, dadurch gekennzeichnet, dass die Enden der Querträger (9) mit der Verbreiterung (4) und/oder der benachbarten Wandung der Längsträger (1) verschraubt sind.

5. Rampe nach Anspruch 1, dadurch gekennzeichnet, dass die Stege (10) mit Durchbrechungen (16) versehen sind, die dicht bei dicht liegend über die Länge der Querträger (9) verteilt sind und sich langgestreckt quer über den Steg erstrecken.

6. Rampe nach Anspruch 5, dadurch gekennzeichnet, dass die Ränder der Durchbrechungen (16) zur Erhöhung der Griffigkeit nach oben gewölbt sind.

7. Rampe nach Anspruch 1, dadurch gekennzeichnet, dass die Längsträger (1) durch vorzugsweise innerhalb der Querträger (9) befindliche Querverbindungen (18) in Verbindung stehen, die dem Zusammenbau der Rampe dienen und eine wesentlich geringere Biegesteifigkeit haben im Vergleich zu den Querträgern (9).

8. Rampe nach Anspruch 2 und 3, dadurch gekennzeichnet, dass die Querträger (9) mit ihren Abwinkelungen oder Abbiegungen (15) aufliegen.

## Claims

1. Displaceable, more especially transportable, inclined ramp for loading and unloading platforms (8) or the like which are disposed relative to the roadway (7), having two longitudinal supports (1) which are situated on each side of the ramp and are joined by means of cross-beams (9) which are distributed over the length of the ramp, have a substantially U-shaped cross-section and form at least the major portion of the vehicular surface (11) of the ramp, the two arms (12) of each crossbeam being joined by means of the crosspiece (10) and being disposed perpendicular to the vehicular surface (11), characterised in that the crosspiece (10) forms the vehicular surface (11), and the downwardly orientated arms (12) of adjacent cross-beams (9) abut against one another and are joined by means of screws (13) or the like.

2. Ramp according to claim 1, characterised in that the arm ends have small angled or bent portions (15) which are inwardly orientated.

3. Ramp according to claim 1, characterised in that the longitudinal supports (1) are an upright hollow profile, the base (3) of which has an inwardly directed widened portion (4) for supporting the cross-beams (9).

4. Ramp according to claim 3, characterised in that the ends of the cross-beams (9) are screw-connected to the widened portion (4) and/or to the adjacent wall of the longitudinal supports (1).

5. Ramp according to claim 1, characterised in that the crosspieces (10) are provided with openings (16) which are closely packed together and distributed over the length of the cross-beams (9) and are elongate in the transverse direction of the crosspiece.

6. Ramp according to claim 5, characterised in that the edges of the openings (16) are upwardly curved to increase the non-skid capacity.

7. Ramp according to claim 1, characterised in that the longitudinal supports (1) are joined by means of transverse connections (18) which are preferably situated internally of the cross-beams (9), the transverse connections being utilised for the assembly of the ramp and having a substantially lower bending resistance compared with the cross-beams (9).

8. Ramp according to claims 2 and 3, characterised in that the cross-beams (9) are supported by their angled or bent portions (15).

## Revendications

1. Rampe inclinée, dont l'emplacement peut être changé, notamment déplaçable, pour charger et décharger des plates-formes (8) ou analogues décalées par rapport à la voie (7), comprenant deux longerons (1) se trouvant des deux côtés de la rampe et reliés par des traverses (9) de section transversale sensiblement en forme de U, réparties sur la longueur de la rampe et formant au moins la plus grande partie de la surface de circulation (11) de la rampe, les deux branches (12) des traverses, reliées par l'âme (10), étant disposées perpendiculairement à la surface de circulation (11), caractérisée en ce que l'âme (10) forme la surface de circulation et les branches (12), dirigées vers le bas, des traverses (9) voisines sont adjacentes et sont reliées par des boulons (13) ou par des éléments analogues.

2. Rampe suivant la revendication 1, caractérisée en ce que les extrémités des branches ont de petits coudes ou courbures (15) qui sont dirigés vers l'intérieur.

3. Rampe suivant la revendication 1, caractérisée en ce que les longerons (1) sont des profilés creux sur champ, dont le fond (3) a un élargissement (4) dirigé vers l'intérieur et destiné à supporté les traverses (9).

4. Rampe suivant la revendication 3, caractérisée en ce que les extrémités des traverses (9) sont boulonnées à l'élargissement (4) et/ou à la paroi voisine des longerons (1).

5. Rampe suivant la revendication 1, caractérisée en ce que les âmes (10) sont munies d'ouvertures (16) qui sont réparties en étant disposées très proche les unes des autres sur la longueur des traverses et dont les directions longitudinales s'étendent transversalement sur l'âme.

6. Rampe suivant la revendication 5, caractérisée en ce que les bords des ouvertures (7) sont recourbés vers le haut pour faciliter la manipulation.

7. Rampe suivant la revendication 1, caractérisée en ce que les longerons (1) sont reliés par des liaisons transversales (18) se trouvant de préférence dans les traverses (9), qui servent au montage de la rampe et qui ont une résistance à la flexion sensiblement plus petite que les traverses (9).

8. Rampe suivant la revendication 2 ou 3, caractérisée en ce que les traverses (9) sont appliquées par leur coude ou par leur partie recourbée (15).

Fig. 1

Fig. 2

Fig. 3

Fig. 4

Fig. 5

0 199 008